# EUROPEAN PATENT APPLICATION

(11) **EP 4 098 864 A1**
(43) Date of publication of application: **07.12.2022**
(21) Application number: 22176137.2
(22) Date of filing: 30.05.2022
(51) Int. Cl.: F03B 13/20, F16C 11/04

(54) **A CONVERSION DEVICE OF ENERGY FROM WAVE MOTION**

(30) Priority: 31.05.2021 IT 202100014141
(71) Applicant: Generma S.r.l., 63837 Falerone (FM) (IT)
(72) Inventor: CIPPITELLI, MAURIZIO, 63837 FALERONE (FM) (IT)
(74) Representative: Dall'Olio, Christian

(57) **Abstract**

The conversion device of energy from wave motion which motion is such as to generate a plurality of wave crests (C) and troughs (V), the device comprising at least a module (M) comprising a first lower rod (1); a second upper rod (2); hinge systems (9); connecting elements (4) to which the first and second rods (1), (2), are hinged by means of hinge systems (9), in such a way that the first and second rods (1), (2) can oscillate with respect to the hinge systems (9) both along the propagation direction (D) of the wave, upwards and downwards, in one direction (F₁), and in the opposite direction (F₂), both transversally with respect to the propagation direction (D) of the wave in one direction (K₁) and in the opposite direction (K₂); a float (6); a movement unit (69) which is connected to the float (6), on one side, and to the upper end of a connecting element (4), on the other side, which comprises: a first connecting element (7); a bearing structure (60) defined by a series of supports (61), the ends of which are connected to one another by means of the first connecting element (7); a series of planes (62), located internally of the bearing structure (60) and anchored to the bearing structure (60) and to the connecting element (7); anchoring means (10) fixed to the first and second rods (1), (2); an actuator (3) for generating electrical energy, the ends of which are respectively hinged to the anchoring means (10), in such a way that the actuator (3) is diagonally arranged between the first and second rods (1), (2), in order to be activated during the oscillation of the first and second rods (1), (2), according to the directions (F₁), (F₂), in relation to the wave motion of the sea water so as to generate electrical energy; electrical connecting elements (E), associated to the actuator (3), and connectable to a power supply line.

## Description

The present invention relates to the technical sector concerning conversion devices of energy from wave motion.

Document EP 3350437 is known, which describes a conversion device of energy from wave motion. The device comprises: a first upper blade and a second lower blade arranged parallel to one another, and rigidly fixed together in a respective end; a plurality of posts arranged parallel to one another and connected to the first blade and the second blade by hinges, so that a quadrilateral is formed between two posts and two sections of the first and second blade between the two posts; floats connected to the hinges on the side of the first blade, in such a way that the first blade is arranged horizontally, substantially parallel to a water surface; an armature connected to an end of the first blade and the second blade, so that the device is installed at a certain depth below the water surface, in the direction of propagation of the waves; hydraulic cylinders, or rotary hydraulic motors, wherein, when the hydraulic cylinders are present, each hydraulic cylinder is arranged between a hinge on the first blade and a hinge on the second blade, a diagonal with respect to the quadrilateral formed between two posts and two sections of the first and second blade between the two posts; and when the rotary hydraulic motors are present, each rotary hydraulic motor is arranged in a hinge on the side of the second blade; a pipe under pressure and a supply pipe connected to the hydraulic cylinders or to the first rotary hydraulic motors; a hydraulic turbine or a main hydraulic motor connected to the pipe under pressure; an electric generator connected to the hydraulic turbine or a main hydraulic motor. In this solution the first blade and the second blade respectively comprise a plurality of connections arranged in series and connected to one another by parallel hinge pins. The first and second blade give rise to a flexible underwater structure, which under the influence of the motion of the waves simultaneously and together with the waves performs undulations and converts these movements into flow pressure of the working fluid, with a subsequent conversion into electrical energy.

The device self-adapts to the profile of the waves along the propagation direction of the waves, but is in fact a transversally rigid structure and, therefore, when subjected to currents, or micro-currents, transversal with respect to the direction of propagation of the waves breakages occur at the most fragile areas of the device i.e. in the hinge points between the connections of the first and second blades. These breakages require replacement operations that are difficult due to the dimensions of the blades.

A further drawback of the device derives from the fact that the dimensions of the first and second blade make the device fragile in the event of extreme force peaks that develop in the sea during storms.

The aim of the present invention consists in obviating the above-mentioned drawbacks.

The aim has been attained with a conversion device of energy from wave motion, according to claim 1.

The first and the second rod are advantageously hinged to the connection elements by means of the hinge systems in such a way that the first and the second rod oscillate with respect to the propagation direction of the wave, upwards and downwards, in order to follow the progress of the waves both transversally with respect to the propagation direction of the wave when the module is struck by transversal currents of different directions and intensity in order to avoid breakages of the parts of the module.

Further, the planes arranged internally of the bearing structure of the movement unit are intercepted by the particles of water which flow internally of the movement unit, in such a way that the movement of the particles of water interacts with the action of the float to facilitate the oscillation of the first and second rods along the propagation direction of the wave in order to activate the actuator along the relative movement axis so as to generate electrical energy.

Further, the planes internally of the structure of the movement unit make the movement unit more resistant in the event that it is struck by force peaks that develop in the sea during storms; the surfaces of the planes which are struck by the forces are smaller with respect to the surfaces of the blades of the device of the prior art.

The characteristics of the invention will be specified in the following in which is described a preferred, but not exclusive, embodiment, with reference to the accompanying tables of drawings, in which:
- figure 1 is a schematic view of a conversion system of energy, comprising a plurality of conversion devices of energy from wave motion object of the invention in a first operating configuration;
- figure 2 is a larger-scale schematic view of detail J of figure 1 which illustrates a non-operating configuration of the module of the device of the invention;
- figure 2A is a larger-scale perspective view of detail H of figure 2;
- figure 3 is a larger-scale schematic view of detail X of figure 1;
- figure 4 is a larger-scale perspective view of detail Y of figure 1;
- figure 5 is a larger-scale perspective view of a second embodiment of a part of the module of the conversion device of energy;
- figure 6 is a larger-scale view of section VI-VI of figure 5;
- figure 7 is a view from above of the system of figure 1 in a second operating configuration thereof;
- figure 8 is a perspective view of part of two modules of two devices for conversion of energy joined to one another;
- figure 9 is a perspective view of the application of a plurality of devices for conversion of energy from wave motion to be positioned in proximity of a barrier.

With reference to the appended figures, reference numeral (100) denotes a conversion device of energy from wave motion comprising at least a module (M) comprising: a first lower rod (1); a second upper rod (2); hinge systems (9); connecting elements (4) to which the first and second rods (1), (2), are hinged by means of hinge systems (9), to define a frame (T) in such a way that the first and second rods (1), (2) can oscillate with respect to the hinge systems (9) both along the propagation direction (D) of the wave, upwards and downwards, in one direction (F₁) and in the opposite direction (F₂), both transversally with respect to the propagation direction (D) of the wave in one direction (K₁) and in the opposite direction (K₂); a float (6); a movement unit (69) which is connected to the float (6), on one side, and to the upper end of a connecting element (4), on the other side, which is such as to interact with the float (6) in relation to the wave motion to facilitate the oscillation of the first and second rods in the directions (F₁), (F₂), which comprises: a first connecting element (7); a bearing structure (60) defined by a series of supports (61), the ends of which are connected to one another by means of the first connecting element (7); a series of planes (62), located internally of the bearing structure (60) and anchored to the bearing structure (60) and to the connecting element (7); anchoring means (10) fixed to the first and second rods (1), (2); an actuator (3) for generating electrical energy, the ends of which are respectively hinged to the anchoring means (10), in such a way that the actuator (3) is diagonally arranged between the first and second rods (1), (2), in order to be activated during the oscillation of the first and second rods (1), (2), according to the directions (F₁, F₂), in relation to the wave motion of the sea water so as to generate electrical energy; electrical connecting elements (E), associated to the actuator (3), and connectable to a power supply line.

The device further and preferably comprises a first stabilising element (5) solid with or hooked to the lower end of each connecting element (4) for stabilising the position of the module perpendicularly to the sea floor.

The first stabilising element (5) is preferably a sort of fin.

The actuator (3) is a preferably a linear alternator.

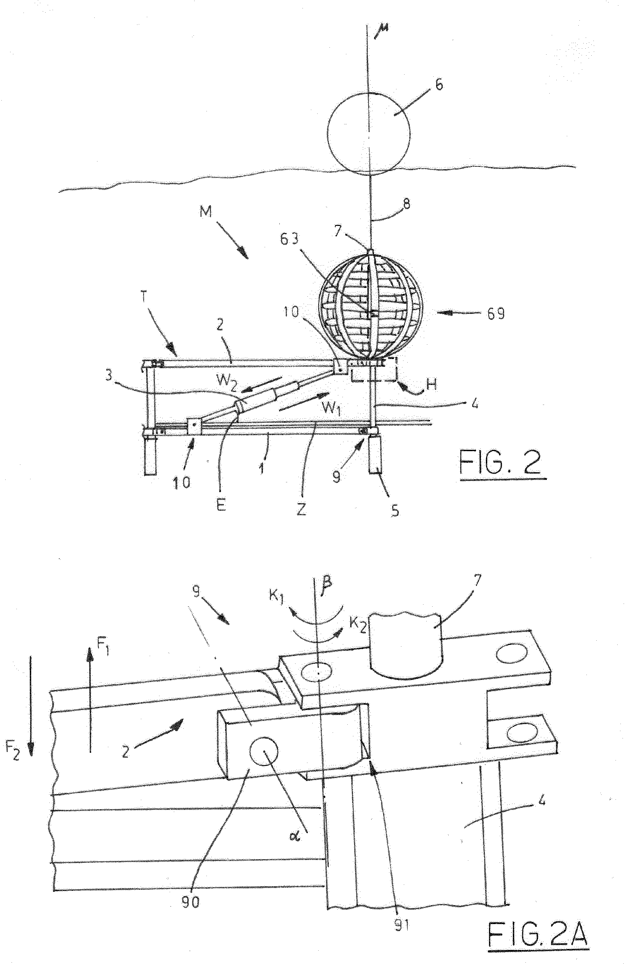

According to a first embodiment of the invention, as illustrated in figure 2A, each hinge system (9) comprises a double hinge, comprising a first joint (90), preferably fork-shaped, anchored to a respective end of the first or second rod (1), (2), in such a way that each rod, first and second, can oscillate with respect to a first axis (α), in one direction (F₁) and in the opposite direction (F₂); a second joint (91), preferably double-fork-shaped, fixed to the connecting element (4), to which the first joint (90) is hinged, in such a way that the first or second bar-first joint assembly can oscillate with respect to a second axis (β), in a direction (K₁), and in the opposite direction (K₂).

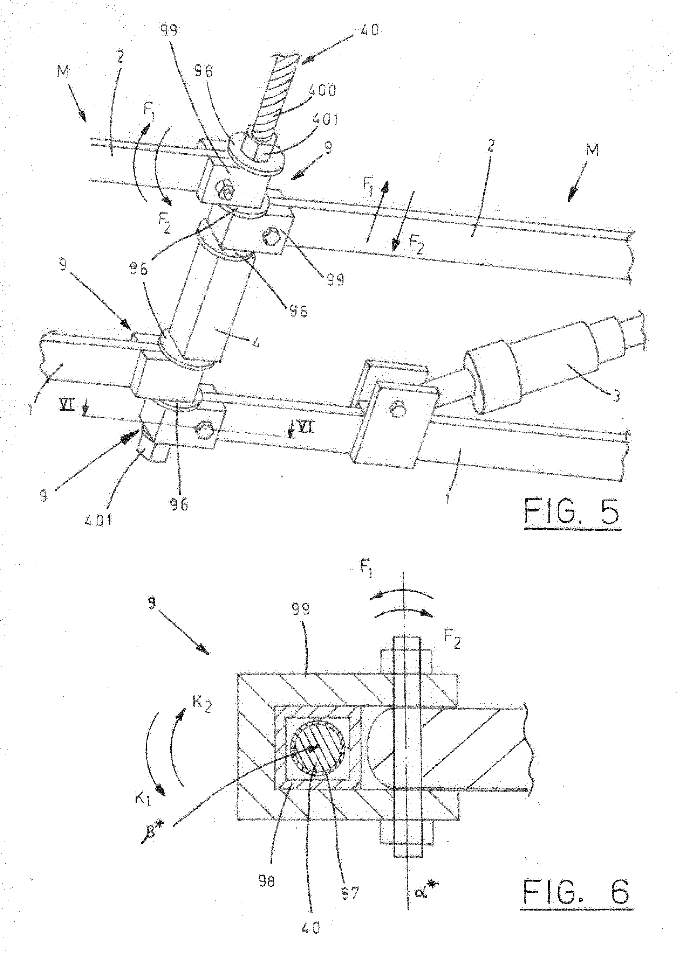

The second joint (91) preferably comprises a double, triple or quadruple attachment so as to be able to connect, to each attachment, a first joint (90) of further identical first and second rods (1), (2), which define further modules (M). According to a second embodiment, as illustrated in figure 5, each hinge system (9) comprises a hook element (99), preferably an overturned U-shaped element, anchored, by screw means, to a respective end of the first or second rod (1), (2), in such a way that the first or second rod (1), (2) can oscillate with respect to the hook element (99) with respect to a first axis (α*) according to the directions of the arrows (F₁), (F₂); a first tubular element (98), having a complementary shape with respect to the inner profile of the hook element (99), and preferably a cylindrical second tubular element (97) freely inserted internally of a first tubular element (98), into which a joint element (40) is freely inserted (for example, a rod (400) that is completely threaded or only at ends thereof, and nuts (401)) in such a way that the hook element / first or second rod assembly can oscillate with respect to a second axis (β*), preferably coinciding with the axis of the joint element (40), according to the directions of the arrows (K₁, K₂).

This hinge system can preferably be associated to each end of the first and second rods (1), (2), of each module (M) and, therefore, as partially illustrated in figure 5, a plurality of adjacent modules (M) are connected by alternating, by means of spacers (96), different hook elements (98) of each module (M) which will be assembled, by means of the joint element (40) with the connecting element (4), which in this embodiment is a tubular element.

The float (6) has a lower density with respect to the density of the water and can form any geometric shape; the float (6) preferably forms a full sphere, or is internally hollow.

The device (100) preferably comprises a second connecting element (8) for connecting the float (6) to the movement unit (69); the first connecting element (7) crosses the movement unit (69), and is connected at an end to the connecting element (4) of the module (M) and at the other end to a second connecting element (8).

The second connecting element (8) preferably connects the float (6) and the movement unit (69) in such a way that they are aligned with respect to an axis (µ). The second connecting element (8) is preferably an anchoring wire.

The first connecting element (7) is preferably a bar.

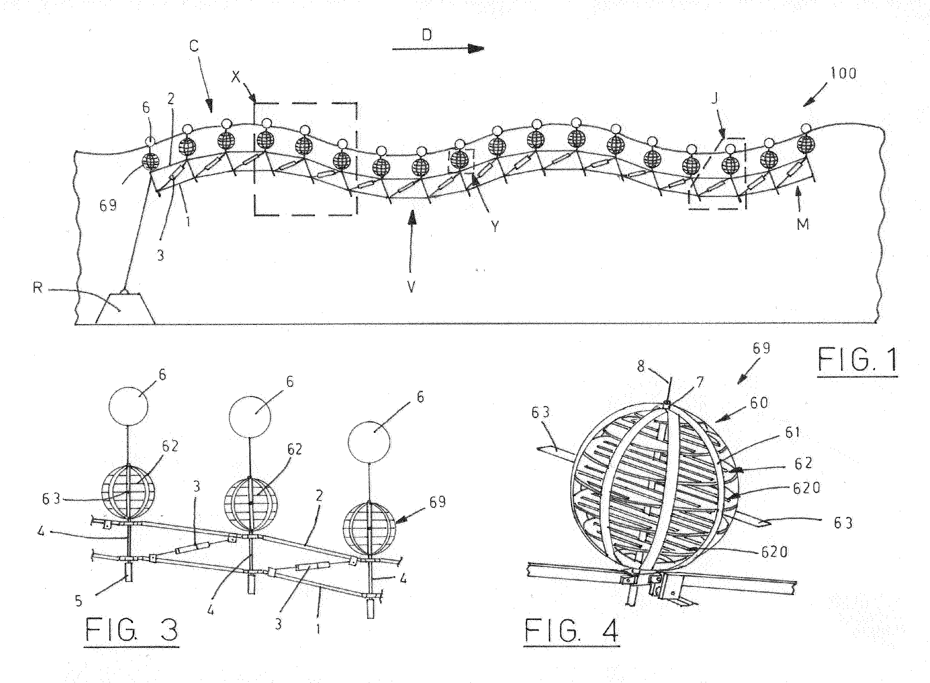

According to a third embodiment, illustrated in figure 4, the supports (61) of the movement unit (69) are preferably distributed and form part of the meridians of a sphere.

The planes (62) are preferably located equidistanced internally of the bearing structure (60) and preferably form circular surfaces.

The planes (62) are preferably located perpendicularly to the first connecting element (7).

Each plane (62) preferably comprises a series of slots (620).

The device preferably further comprises second stabilising elements (63) which extend outwardly of the movement unit (69) on a secant plane, at the centre of the movement unit (69), to stabilise the position of the module perpendicularly to the sea floor; the second stabilising elements (63) are preferably wings.

A object of the invention is also a conversion system of energy from wave motion, which comprises the conversion device of energy from wave motion, a cable and an armature (R) connected to the module (M) by means of the cable so that the module (M) is installed at a certain depth below the water surface, in the direction of propagation of the waves.

The conversion system of energy from wave motion, for example as illustrated in figure 1 realised by the joining of a plurality of modules (M), is fixed on the high sea, with the float (6) emerging from the surface of the sea water, and the movement unit (69) immersed below the surface of the sea water so that the modules (M) are positioned perpendicularly to the sea floor; the conversion system of energy enters into operation following the wave motion of the sea water.

As is known, sea waves are in irregular motion caused by the wind on the water surface and the displacement of the waves is not due to a horizontal displacement of the molecules of the water, but rather these are caused by vertical oscillations of the molecules of the water.

The shape of the wave is the only which moves laterally with its own energy, i.e. the translation of the water due to the force of the wind.

In reality, on the high seas the molecules of the water describe closed trajectories with orbits having a circular shape about a fixed point, and when the wave passes, the particles of the water are raised and displaced a little forward, and then they lower once more and are displaced a little backward.

As shown in figure 1 in proximity of the crest of the wave (C), each module (M) is pushed upwards with a consequent oscillation of the first and second rods (1), (2), of a group of modules (M) of the system in direction (F₁); this oscillation is generated by the Archimedes' thrust of each float (6) and facilitated by the conformation of each movement unit (69), as the particles of the water internally of the movement unit (69), due to the motion thereof, intercept the planes (62) by cooperating with the action of the corresponding float (6) so as to generate the oscillation.

Therefore, each linear alternator is activated by the oscillation along the movement axis thereof in direction (W₁) (figure 2) in such a way that internally of the linear alternator, as known, a change in the magnetic field is generated, which generates electrical energy in output therefrom.

In proximity of the trough (V) of the wave (C), each module (M) is pushed downwards with a consequent oscillation of the first and second rods (1), (2), of another group of modules (M) of the device (100) in direction (F₂); the oscillation is due to the action of the force of gravity and facilitated by the conformation of each movement unit (69), as the particles of the water internally of the movement unit (69), due to the motion thereof, intercept the planes (62) by cooperating with the action of the float (6) in the oscillation.

Following the oscillation of the modules (M) each linear alternator is activated along the movement axis thereof in direction (W₂) in such a way that internally of the linear alternator, as known, a change in the magnetic field is generated, which generates electrical energy in output therefrom.

It should be remembered, further, that winds are also the direct cause of sea currents and in particular the currents involving the surface layers of the masses of water, known as surface currents or drift currents. The circulation of the water is further influenced by the presence of the continents also, which create a bank and an obstacle. The wind draws the water by friction force; the internal frictions in the water column are such that the surface layers progressively draw the deeper layers. The frictions depend both on the viscosity of the water, which acts at the molecular level, and from the vortices, small masses of water of various dimensions that move irregularly in all directions.

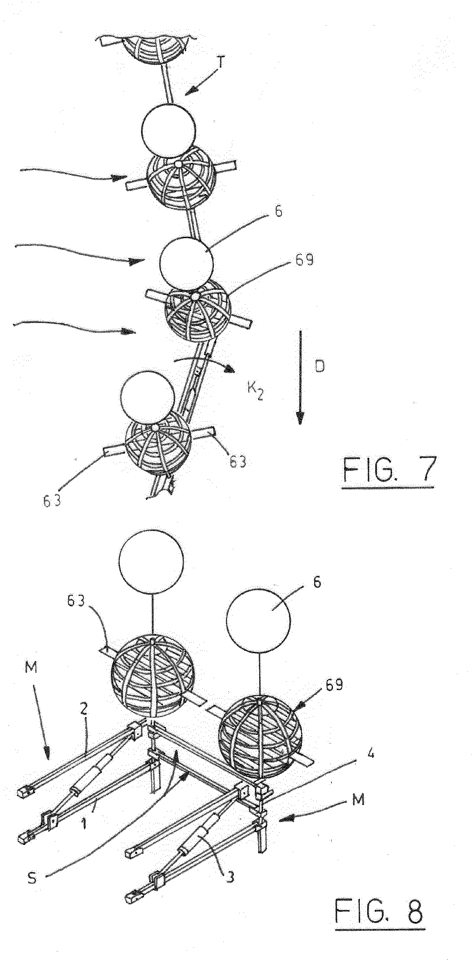

In the case, therefore, where there are currents present that act transversally on one or more modules (M) (figure 7) the first and the second rods (1), (2) of the corresponding module/s (M) are displaced transversally according to a corresponding direction (K₁), or (K₂), concordant with the propagation direction of the transversal currents.

The device is constituted by at least one module that, as previously described, comprises hinge systems (9) which enable the module (M) to be able to oscillate both with respect to the propagation direction (D) of the sea wave according to directions (F₁), (F₂), in such a way that the module (M) can follow the progress of the sea wave, and transversally with respect to the propagation direction (D) of the sea wave according to directions (K₁), (K₂), in such a way that the module (M) can vary the orientation thereof with respect to the propagation direction (D) of the sea wave.

The oscillations in directions (K₁), (K₂) enable the device to avoid breakages thereof in the case of anomalous currents or movements of the waves.

In fact, the hinge systems (9) are suitably provided at the ends of each first and second rod, and in the case in which the device is struck by transversal currents, or anomalous movements of the waves, of different direction and intensity, each rod will oscillate independently of the other in such a way as to make the device particularly flexible and adaptable to the various stresses to which it is subjected. The frame (T) of each module is substantially a "two-dimensional" structure the positioning of which and the stabilisation in water whereof is primarily delegated to the float (6) and in subordination both to the first stabilising element (5) and the second stabilising elements (63) which cooperate with one another to maintain the device always perpendicular to the sea plane in order to prevent rolling of the module (M).

The fact of including a float (6), having a smaller density than the density of sea water and a movement unit (69), realised by a bearing structure (60) and by a series of planes (62), additionally provided with slots (620), facilitates the oscillation of the first and the second rod (1), (2), of the module (M) according to directions (F₁), (F₂), to determine the activation of each linear alternator along the relative movement axis.

From experimental tests, in fact, it has been verified that the conformation of the movement unit (69) is such that the particles of the water crossing the unit, due to the motion thereof, by intercepting the planes (62) exert a force on the surface thereof in such a way as to cooperate with the Archimedes' thrust, in the ascending step of the motion of the particles, to determine the oscillation of the first and the second rod (1), (2), according to direction (F₁), and to cooperate with the force of gravity, in the descending step of the particles, to determine the oscillation of the first and the second rod (1), (2), according to direction (F₂).

As the movement unit (69) comprises a plurality of superposed planes (62), the movement unit (69) is particularly resistant to any extreme force peaks which develop in the sea during storms, as the surfaces of the planes which are struck by the forces are smaller with respect to the surfaces of the blades of the devices of the prior art.

Owing to its conformation, the module (M) can be used for realising conversion devices obtained by flanking a plurality of identical modules (M), as partially illustrated in figure 8, by means of cross-members (S), to obtain a multiple structure able to exploit the wave motion to the maximum in some areas.

The constructional simplicity of each module (M) is such that the maintenance thereof is simple.

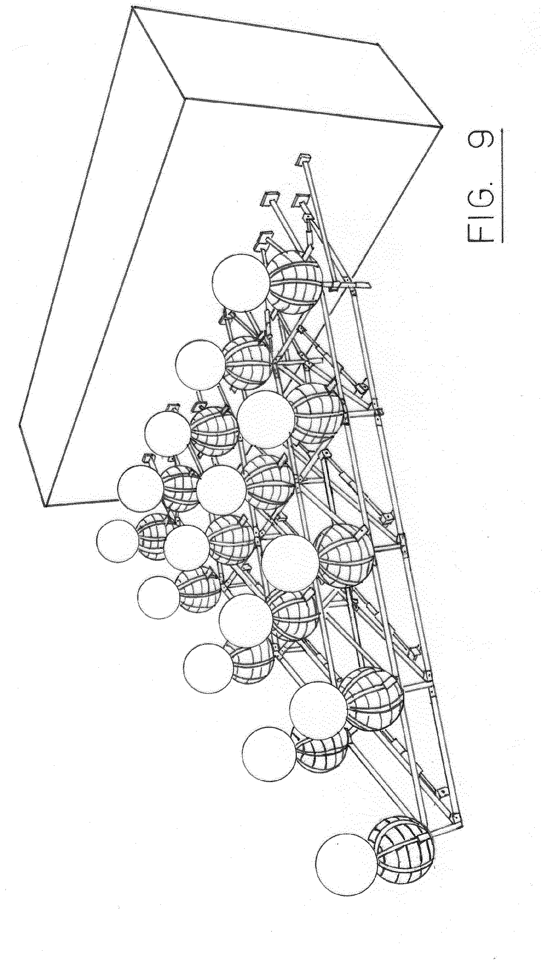

Further, the fact that the module (M) is obtained by suitably hinging the rods to which are hooked an actuator (3), a float (6) and a movement unit (69) is further advantageous, as it is possible to hook a plurality of modules (M) to a breakwater, a quayside, natural rocks, in such a way that the module can oscillate only in directions (F₁), (F₂), and to project suitable couplings between rods, cross-members, actuators, floats and a movement unit, to realise net structures, for example having a triangular shape as illustrated in figure 9, which equally enable conversion of the wave motion into energy in proximity of a breakwater, quayside, natural rocks.

It is understood that the above has been described by way of non-limiting example and that any modifications are all considered to fall within the protective scope, as claimed in the following.

## Claims

1. A conversion device of energy from wave motion, which motion is such as to generate a plurality of crests (C) and troughs (V), the device being **characterised in that** it comprises at least a module (M) comprising:
a first lower rod (1);
a second upper rod (2);
hinge systems (9);
connecting elements (4) to which the first and second rods (1), (2), are hinged by means of hinge systems (9), to define a frame (T) in such a way that the first and second rods (1), (2) can oscillate with respect to the hinge systems (9) both along the propagation direction (D) of the wave, upwards and downwards, in one direction (F₁) and in the opposite direction (F₂), both transversally with respect to the propagation direction (D) of the wave in one direction (K₁) and in the opposite direction (K₂);
a float (6);
a movement unit (69) which is connected to the float (6), on one side, and to the upper end of a connecting element (4), on the other side, which is such as to interact with the float (6) in relation to the wave motion to facilitate the oscillation of the first and second rods in the directions (F₁, F₂), which comprises: a first connecting element (7); a bearing structure (60) defined by a series of supports (61), the ends of which are connected to one another by means of the first connecting element (7); a series of planes (62), located internally of the bearing structure (60) and anchored to the bearing structure (60) and to the connecting element (7);
anchoring means (10) fixed to the first and second rods (1), (2);
an actuator (3) for generating electrical energy, the ends of which are respectively hinged to the anchoring means (10), in such a way that the actuator (3) is diagonally arranged between the first and second rods (1), (2), in order to be activated during the oscillation of the first and second rods (1), (2), according to the directions (F₁, F₂), in relation to the wave motion of the sea water so as to generate electrical energy; electrical connecting elements (E), associated to the actuator (3) and connectable to a power supply line.

2. The conversion device of energy from wave motion of claim 1, wherein the planes (62) are located equidistanced internally of the bearing structure (60).

3. The conversion device of energy from wave motion of claim 1 or 2, wherein the planes (62) are located perpendicularly to the first connecting element (7).

4. The conversion device of energy from wave motion of claim 1 or 2 or 3, wherein each of the planes (62) comprises a series of slots (620).

5. The conversion device of energy from wave motion of any one of claims 1 to 4, wherein each hinge system (9) comprises a double hinge comprising a first joint (90) anchored to a respective end of the first or second rod (1), (2), in such a way that each rod, first and second, can oscillate with respect to a first axis (α), according to the directions (F₁), (F₂); a second joint (91) fixed to the connecting element (4), to which the first joint (90) is hinged, in such a way that the first or second bar-first joint assembly can oscillate with respect to a second axis (β), according to the directions (K₁), (K₂).

6. The conversion device of energy from wave motion of any one of claims 1 to 4, wherein each hinge system (9) comprises: a hook element (99) anchored, by screw means, to a respective end of the first or second rod (1), (2), in such a way that the first or second rod (1), (2) can oscillate with respect to the first hook element (99) with respect to a first axis (α*) according to the directions (F₁), (F₂); at least a first tubular element (98), having a complementary shape with respect to the inner profile of the hook element (99), into which a joint element (40) is freely inserted, in such a way that the hook element and the first or second rod assembly can oscillate with respect to a second axis (β*) according to directions (K₁), (K₂).

7. The conversion device of energy from wave motion of any one of claims 1 to 4, wherein: it comprises a second connecting element (8) for connecting the float (6) to the movement unit (69); the first connecting element (7) crosses the movement unit (69), and is connected at an end to the connecting element (4) of the module (M) and at the other end to a second connecting element (8).

8. The conversion device of energy from wave motion of any one of claims 1 to 4, wherein the actuator (3) is a linear alternator.

9. The conversion device of energy from wave motion of any one of claims 1 to 5, wherein the second joint (91) comprises a double, triple or quadruple attachment so as to be able to connect, to each attachment, a first joint (90) of further identical first and second rods (1), (2), which define further modules (M).

10. The conversion device of energy from wave motion of any one of claims 1 to 4, wherein it comprises a first stabilising element (5) solidly constrained, or hooked to the lower end of each connecting element (4) for stabilising the position of the module perpendicularly to the sea floor.

11. The conversion device of energy from wave motion of any one of claims 1 to 4, wherein it comprises second stabilising elements (63) which extend outwardly of the movement unit (69) on a secant plane the centre of the movement unit (69) to stabilise the position of the module perpendicularly to the sea floor.

12. The device of claim 10, wherein the first stabilising element (5) is a fin.

13. The device of claim 11, wherein the second stabilising elements (63) are wings.

14. A conversion system of energy from wave motion, comprising: a conversion device of energy from wave motion of any one of the preceding claims; a cable; and an armature (R) connected to the module (M) by means of the cable so that the module (M) is installed at a certain depth below the water surface, in the direction of propagation of the waves.
